# FASCICULE DE BREVET EUROPEEN

(11) **EP 2 496 472 B1**
(45) Date de publication et mention de la délivrance du brevet: **05.03.2014**
(21) Numéro de dépôt: 10787857.1
(22) Date de dépôt: 27.10.2010
(51) Int. Cl.: B64C 7/02, B64C 23/06, B64D 29/02

(54) **MAT REACTEUR EQUIPE D'UN GENERATEUR DE TOURBILLONS ET SON PROCEDE DE FABRICATION**
TRIEBWERKSGONDEL MIT WIRBELGENERATOR UND IHRE HERSTELLUNGSVERFAHREN
ENGINE PYLON COMPRISING A VORTEX GENERATOR, AND METHOD FOR THE PRODUCTION THEREOF

(30) Priorité: 06.11.2009 FR 0957891
(43) Date de publication de la demande: 12.09.2012
(73) Titulaire: Airbus Operations (S.A.S.), 31060 Toulouse (FR)
(72) Inventeur: BEDOIN, Steve, F-31500 Toulouse (FR); BONNAUD, Cyril, F-31200 Toulouse (FR)
(74) Mandataire: Gicquel, Olivier Yves Gérard
(86) Numéro de dépôt international: PCT/FR2010/052299
(87) Numéro de publication internationale: WO 2011/055062

(56) Documents cités:
- FR-A1- 2 905 930
- GB-A- 2 112 077
- US-A1- 2009 230 251

## Description

### Domaine de l'invention

L'invention concerne un procédé de fabrication d'un mât réacteur destiné à être monté entre un réacteur d'aéronef et une voilure de l'aéronef. Ce procédé consiste à équiper le mât d'au moins un générateur de tourbillons permettant, indirectement, de modifier la forme du mât.

L'invention trouve des applications dans le domaine de l'aéronautique et, en particulier, dans le domaine de la fabrication des mâts réacteurs.

### Etat de la technique

Les aéronefs actuels sont équipés, pour la plupart, de mâts profilés, suspendus à leur voilure, et assurant une liaison entre leurs moteurs et la voilure. Ces mâts profilés faisant saillie par rapport à l'intrados de la voilure, ils engendrent des perturbations aérodynamiques sur la voilure et, d'une façon générale, sur l'ensemble de l'aéronef. Ces perturbations aérodynamiques ont des effets défavorables, tels qu'une perte de la portance et un accroissement de la trainée. En outre, ces effets aérodynamiques sont renforcés par le fait que, pour des raisons structurelles, les mâts présentent une largeur relativement importante avec un bord de fuite au voisinage du bord de fuite de la voilure, un tel voisinage de bords de fuite augmentant les risques de décollement des filets d'air le long de l'aéronef.

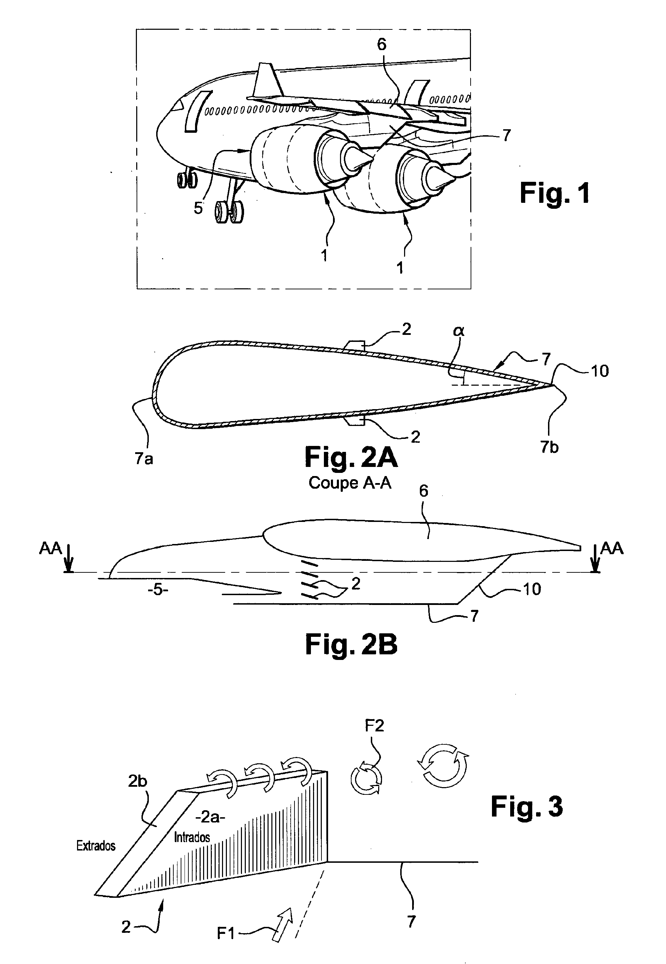

Sur la figure 1, on a représenté un exemple d'aéronef quadriréacteur dont seulement deux réacteurs 1 sont visibles. Chacun de ces réacteurs 1 est installé dans une nacelle 5 fixée à la voilure 6 par l'intermédiaire d'un mât 7. La nacelle 5 est montée suivant l'axe longitudinal de l'aéronef. Pour obtenir des performances aérodynamiques les moins défavorables possible, la forme du mât réacteur est profilée. Généralement, le mât réacteur a une forme de goutte d'eau allongée, c'est-à-dire une force oblongue, avec une première extrémité arrondie et des flancs rectilignes qui se rejoignent en pointe à une seconde extrémité, comme représenté sur la figure 2A. Cette figure 2A montre une vue de dessus d'un mât réacteur classique. Il est à noter que l'extrémité arrondie 7a du mât réacteur est dirigée vers l'avant de l'aéronef tandis que l'extrémité en pointe 7b est dirigée vers l'arrière de l'aéronef, l'avant de l'aéronef étant le nez de l'aéronef.

Le mât 7 de la figure 2A est également représenté, selon une vue de profil, sur la figure 2B. Cette figure 2B montre que le mât réacteur 7, appelé aussi simplement mât, est accroché à la voilure 6 et supporte la nacelle 5. Ce mât réacteur 7, comporte :
- une structure, appelée structure primaire, assurant la liaison mécanique entre la voilure et le réacteur et, par conséquent, la transmission des efforts émis par le moteur du réacteur vers l'ensemble de l'aéronef, en passant par la voilure, et
- un caisson entourant la structure primaire et de forme profilée.

Le mât 7 forme, avec la voilure 6, un angle de rétreint α. Cet angle de rétreint est généralement compris entre 10 ° et 20 °.

Lorsqu'un aéronef est en vol, l'air s'écoule le long de l'aéronef et forme, le long de la structure, une couche limite. Cette couche limite est une épaisseur d'écoulement d'air turbulent entre la surface du caisson du mât et l'écoulement de l'air extérieur. Dans la couche limite, l'air a une vitesse nulle, ou proche de zéro, ce qui crée des turbulences. Au contraire, l'air extérieur s'écoulant à une certaine distance de la surface du caisson du mât a une vitesse suffisante pour éviter les turbulences.

Il est à noter que l'épaisseur de la couche limite au bord de fuite 10 du mât dépend de la longueur du mât, appelée corde, et de l'angle de rétreint α. Si les angles de rétreint sont trop faibles, le mât est trop long et génère beaucoup de trainée. Si les angles de rétreint sont trop grands, on risque un décollement d'air, ce qui génère également de la trainée. Les constructeurs aéronautiques cherchent donc un compromis sur les angles de rétreint pour limiter la trainée.

Si, malgré ce compromis aérodynamique, l'aéronef en vol subit des décollements d'air, il est possible d'équiper les mâts réacteurs de générateurs de tourbillons (ou vortex generators, en termes anglo-saxons). Classiquement, ces générateurs de tourbillons, référencés 2 sur les figures 2A et 2B, sont montés sur le caisson du mât, après conception et fabrication de l'aéronef. Ils sont montés sur le caisson du mât après que le constructeur aéronautique se soit aperçu qu'il existe des décollements d'air, en vol. Ces générateurs de tourbillons 2 sont des ailettes agencées de façon à faire saillie sur le caisson du mât 7 afin de modifier l'écoulement de l'air le long dudit mât. Ces générateurs de tourbillons 2 assurent un mélange de l'air de la couche limite avec l'air de la couche extérieur, ce qui permet d'augmenter la vitesse de l'air à proximité immédiate du mât, évitant ainsi les décollements d'air. Le rôle d'un tel générateur de tourbillons est représenté de façon schématique sur la figure 3. Cette figure montre, par une flèche F1, l'écoulement d'air local le long d'un mât 7. Elle montre également, par les flèches F2, les tourbillons d'air générés par les générateurs de tourbillons 2, ces tourbillons étant la conséquence de l'enroulement d'air qui se produit à l'extrémité des ailettes 2 du fait de la différence de pression entre l'intrados 2a et l'extrados 2b de l'ailette.

Un exemple de générateurs de tourbillons destiné à être installé après fabrication de l'aéronef pour modifier l'écoulement d'air le long du mât est décrit dans la demande de brevet français FR-2 905 930. Le système d'ailettes décrit dans ce document permet d'adapter le mât réacteur d'un aéronef aux conditions de fonctionnement dudit aéronef. Cependant, ces ailettes entraînent nécessairement une augmentation de la masse totale de l'aéronef par rapport à la masse prévue lors de sa conception, mais également un incrément de trainée lié à l'ailette elle-même.

Un mât réacteur par aéronef est aussi connu de GB-2 112 077, qui est regardé comme l'art antérieur le plus proche.

Par ailleurs, les constructeurs aéronautiques cherchent en permanence à améliorer les performances aérodynamiques d'un aéronef. Ces performances peuvent être améliorées de deux façons différentes :
- soit en améliorant la traînée, c'est-à-dire en la diminuant,
- soit en diminuant la masse de l'aéronef.

Cependant, la traînée et la masse d'un aéronef sont directement liées l'une à l'autre. En effet, pour diminuer la trainée, des générateurs de tourbillons peuvent être installés sur le mât réacteur. Or, ces générateurs de tourbillons ont une masse non négligeable qui augmente la masse totale de l'aéronef. Et, si aucun générateur de tourbillon n'est installé, la trainée de l'aéronef reste relativement importante du fait des décollements d'air.

### Exposé de l'invention

L'invention a justement pour but de remédier aux inconvénients des techniques exposées précédemment. A cette fin, l'invention propose de fabriquer des mâts réacteurs pour aéronefs intégrant, dès leur conception, des générateurs de tourbillons. Ces générateurs de tourbillons étant intégrés au mât de l'aéronef dès la conception dudit aéronef, il est possible de modifier les dimensions du mât réacteur, afin de gagner en masse, sans toutefois entraîner d'effets aérodynamiques néfastes.

De façon plus précise, l'invention concerne un procédé de fabrication (revendication 1) d'un mât réacteur destiné à être monté entre un réacteur et une voilure (6) d'un aéronef, comportant :
- une opération de montage d'un caisson de mât autour d'une structure primaire, le caisson ayant une forme sensiblement oblongue le long duquel se forme, en vol, une couche limite d'air,
- une opération de montage d'au moins un générateur de tourbillons sur le caisson du mât afin que soit modifiée l'épaisseur de la couche limite au bord de fuite du mât,
caractérisé en ce qu'il comporte, au préalable, une opération de détermination de la forme du mât, en fonction de l'épaisseur modifiée de la couche limite et du positionnement des générateurs de tourbillons.

Le procédé de fabrication de l'invention peut comporter une ou plusieurs des caractéristiques suivantes :
- des générateurs de tourbillons sont montés symétriquement de part et d'autre du caisson du mât.
- la forme du mât est déterminée pour que la structure primaire ait une surface élargie afin d'améliorer une reprise des efforts provenant du réacteur.
- la forme du mât est déterminée pour qu'une longueur du caisson soit raccourcie.
- au moins un générateur de tourbillons est monté sur un seul coté du caisson du mât, induisant un effet de courbure de la forme aérodynamique du mât.

L'invention concerne également un mât réacteur pour aéronef, fabriqué suivant le procédé décrit précédemment tel que défini par les caractéristiques techniques des revendications indépendantes 6, 7 et 8.

L'invention concerne également un aéronef comportant une voilure, au moins un réacteur et un mât réacteur reliant la voilure et le réacteur, ledit mât réacteur étant fabriqué suivant le procédé décrit précédemment.

### Brève description des dessins

La figure 1, déjà décrite, représente une vue de coté d'un aéronef avec deux réacteurs.
Les figures 2A et 2B, déjà décrites, représentent un mât réacteur classique équipé de générateurs de tourbillons.
La figure 3, déjà décrite, représente schématiquement l'écoulement d'air aux alentours d'un générateur de tourbillons.
Les figures 4A et 4B représentent, respectivement, une vue de coté et une vue de dessus d'une structure de mât réacteur.
Les figures 5A et 5B représentent la structure des figures 4A et 4B lorsque le mât réacteur est équipé de générateurs de tourbillons.
Les figures 6A et 6B représentent une vue de dessus d'un mât réacteur réalisé suivant un premier mode de réalisation du procédé de l'invention.
Les figures 7A et 7B représentent une vue de dessus d'un mât réacteur réalisé suivant un deuxième mode de réalisation du procédé de l'invention.
Les figures 8A et 8B représentent une vue de dessus d'un mât réacteur réalisé suivant un troisième mode de réalisation du procédé de l'invention.

### Description détaillée de modes de réalisation de l'invention

L'invention propose un procédé de fabrication d'un mât réacteur dans lequel des générateurs de tourbillons sont montés sur le mât dès la conception dudit mât. Le fait d'intégrer des générateurs de tourbillons lors de la conception du mât réacteur permet de diminuer l'épaisseur de la couche limite, en vol, par rapport à un mât réacteur conçu, classiquement, sans générateur de tourbillon. Ce gain d'épaisseur de la couche limite permet de modifier la forme du mât réacteur, afin de gagner en masse. Il est ainsi possible d'améliorer la trainée (par une diminution de la couche limite), et/ou diminuer la masse totale de l'aéronef (par une modification de la forme du mât réacteur).

La forme du mât est déterminée de façon à augmenter les angles de rétreint entre la voilure 6 et le mât réacteur 7. En effet, augmenter les angles de rétreint, sans dégrader la performance aérodynamique, permet d'améliorer les caractéristiques de l'aéronef. En d'autres termes, le procédé de l'invention permet de diminuer la masse à iso-traînée ou de diminuer la traînée à iso-masse.

Dans toute la description de l'invention, la diminution ou l'augmentation de la masse, de la traînée ou de la forme du mât sera établie par rapport à un aéronef classique, de même type, équipé d'un mât réacteur sans générateur de tourbillons, ou d'un mât réacteur avec générateurs de tourbillons montés après fabrication. Autrement dit, ces comparaisons sont établies pour des caractéristiques de mâts identiques fabriqués, d'une part selon le procédé de l'invention et, d'autre part, selon un procédé conventionnel.

Le procédé de l'invention propose donc d'intégrer des générateurs de tourbillons sur le mât réacteur dès la conception de l'aéronef, et de les monter sur le mât lors de la fabrication de l'aéronef, afin de profiter des avantages apportés par ces générateurs de tourbillons pour modifier la forme du mât réacteur.

Les générateurs de tourbillons sont des petites surfaces qui, à la manière d'une aile, produisent un sillage tourbillonnaire en aval de leur bord de fuite. Dans l'invention, on utilise ces générateurs de tourbillons en les plaçant de manière à traiter une zone bien définie du flanc des mâts. Les générateurs de tourbillons peuvent avoir, par exemple, les dimensions suivantes : une hauteur de quelques centimètres à quelques décimètres, une longueur préférentiellement égale ou supérieure à 3 fois la hauteur, et un bord d'attaque compris entre 20 et 90 degrés. Les générateurs de tourbillons agissent alors en mélangeant de l'air à l'extérieur de la couche limite (air très énergisé) avec l'air de la couche limite qui a perdu de l'énergie. Le comportement de la couche limite se trouve amélioré et son épaisseur diminue.

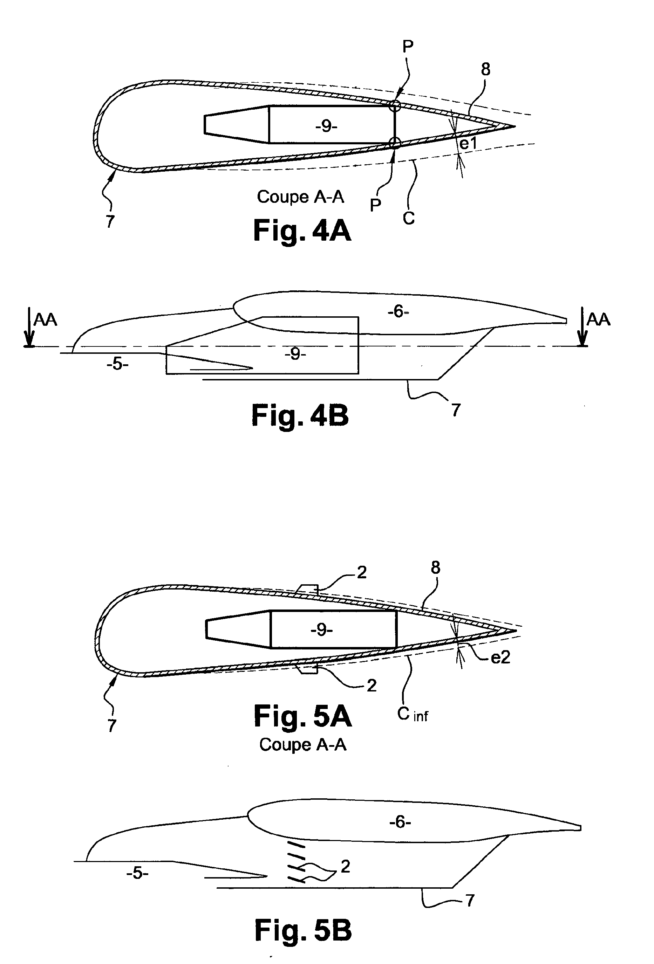

On a représenté sur les figures 4A et 4B, un exemple de mât réacteur 7, avec son caisson 8 et sa structure primaire 9. La structure primaire 9 du mât 7 indique les points dimensionnants P de la forme aérodynamique du mât, c'est-à-dire les points durs par lesquels le caisson doit nécessairement passer pour assurer la liaison mécanique entre le réacteur et la voilure. Dans cet exemple, le mât réacteur n'a pas de générateur de tourbillons. On a représenté, en traits pointillés, sur la figure 4A, la couche limite C correspondant à la forme aérodynamique du caisson 8 du mât 7 sans générateur de tourbillons. Dans l'exemple des figures 4A et 4B, la couche limite a une épaisseur e1.

Sur les figures 5A et 5B, on a représenté le même mât 7 que sur les figures 4A et 4B, mais dans le cas où le mât est muni de générateurs de tourbillons 2. On voit que, dans ce cas, la couche limite Cinf a une épaisseur e2, inférieure à l'épaisseur e1, cette diminution d'épaisseur de la couche limite étant provoquée par la présence des générateurs de tourbillons 2.

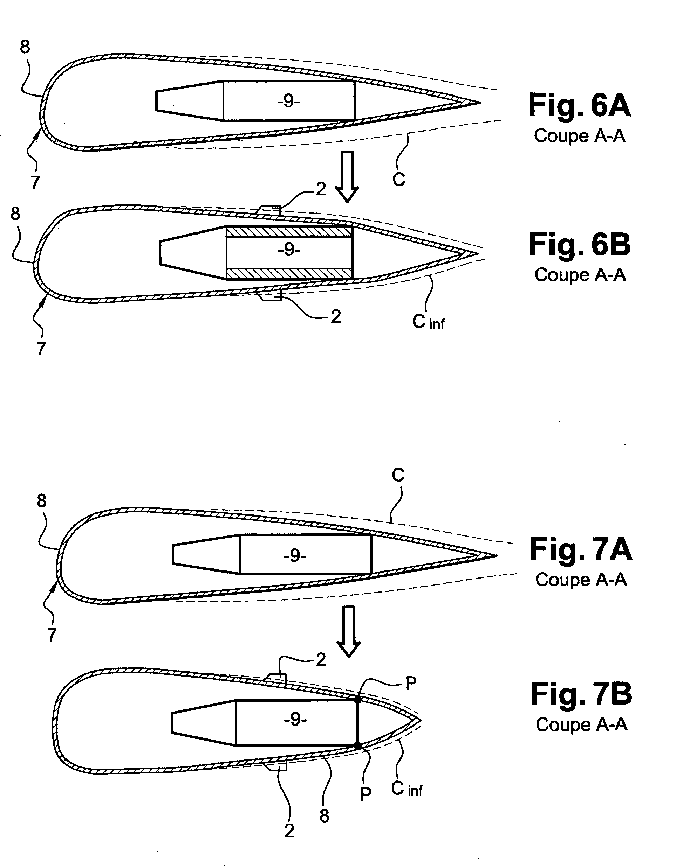

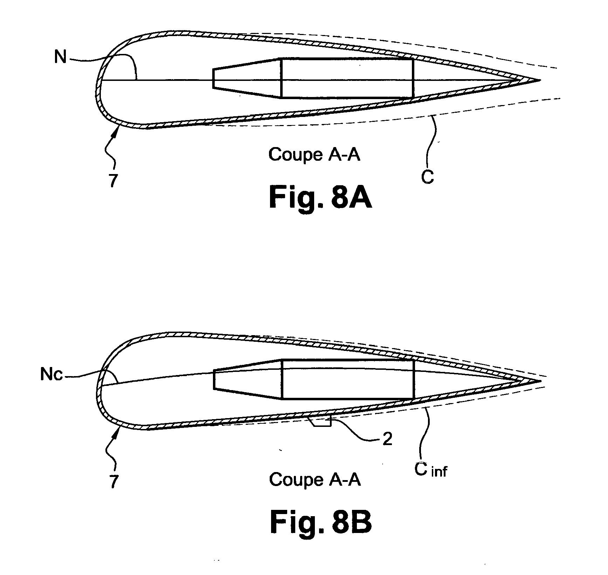

Du fait de cette diminution de l'épaisseur de couche limite Cinf, l'invention permet de gagner en masse sur le mât réacteur. Ce gain de masse peut être obtenu de différentes façons :
- en élargissant la structure primaire 9 du mât 7, comme montré sur les figures 6A et 6B,
- en raccourcissant la forme aérodynamique du caisson 8, comme montré sur les figures 7A et 7B, ou
- en autorisant une courbure du mât 7, comme montré sur les figures 8A et 8B.

Dans un premier mode de réalisation de l'invention, le gain de masse est obtenu par élargissement de la structure primaire 9 du mât. On rappelle que la structure primaire du mât est une pièce structurale qui permet de transmettre les efforts provenant du réacteur vers la voilure et vers l'ensemble de la structure de l'aéronef. Cette structure primaire 9 a une forme sensiblement parallélépipédique, comme montré sur la figure 6A. Dans l'invention, on propose de réaliser une structure primaire 9 plus large, à iso-comportements aérodynamiques. Cet élargissement de la structure primaire est de l'ordre de 1 à 10%. Comme montré sur la figure 6B, la structure primaire est élargie au niveau de sa surface rectangulaire, sa forme globale restant parallélépipédique. Cet élargissement de la structure primaire offre une meilleure transmission des efforts de reprise. La transmission des efforts étant facilitée, la structure primaire est moins lourde.

Dans un second mode de réalisation de l'invention, le gain de masse est obtenu par raccourcissement de la forme aérodynamique du caisson 8 du mât réacteur. Un exemple de ce mode de réalisation est représenté sur les figures 7A et 7B. La figure 7A montre un exemple de mât classique, avec une forme de caisson classique et la couche limite C. La figure 7B montre un exemple d'un mât réalisé selon le procédé de l'invention. Dans cet exemple, la structure primaire a des dimensions classiques, mais le caisson de mât 8 a une forme raccourcie, c'est-à-dire dont la forme au niveau de la pointe est plus courte que pour un caisson classique. Cette forme raccourcie est définie de façon à ce qu'elle passe par les points dimensionnants P de la structure primaire 9. Cette diminution de la longueur du caisson de mât, de l'ordre de 5 à 15%, induit une augmentation des angles de rétreint entre la voilure et le mât. L'invention permet ainsi la réalisation d'un mât réacteur ayant des angles de rétreint pouvant être deux fois plus grands que ceux des mâts réacteurs classiques, c'est-à-dire de l'ordre de 20 à 40 °.

En l'absence de générateurs de tourbillons, ces angles de rétreint seraient inacceptables car trop grands : ils entraineraient un décollement d'air. Les générateurs de tourbillons rendent la couche limite plus robuste, celle-ci pouvant alors supporter des angles de rétreint plus importants. Ce caisson de mât de dimensions réduites offre à la fois des gains structuraux (masse moins lourde car dimensions plus faibles) et des gains aérodynamiques (moins de surface).

Dans les deux modes de réalisation qui viennent d'être décrits, les générateurs de tourbillons sont montés de façon symétrique de part et d'autre du mât 7. Autrement dit, le même nombre de générateurs de tourbillons est monté sur l'extrados et sur l'intrados du mât réacteur. La couche limite Cinf est donc symétrique de part et d'autre du caisson du mât.

Dans un troisième mode de réalisation de l'invention, l'amélioration des performances aérodynamiques est obtenue par génération d'un effet de cambrure de la forme aérodynamique du mât réacteur. En effet, d'une façon générale, l'air arrivant sur le mât réacteur voit une ligne neutre N rectiligne correspondant à l'axe de symétrie traversant le mât réacteur. Il est possible de créer, selon l'invention, un effet de courbure qui fait en sorte que l'air arrivant sur le mât voit la ligne neutre Nc courbe, et non plus rectiligne, comme représenté sur les figures 8A et 8B. Cet effet de courbure est créé en montant au moins une ailette sur un seul côté du mât réacteur.

Dans le mode de réalisation des figures 8A et 8B, une seule ailette est montée sur l'intrados ou sur l'extrados du mât réacteur 7 de façon à ce que le flux d'air ne soit pas réparti symétriquement de part et d'autre du mât réacteur. Cette répartition asymétrique du flux d'air, par rapport à l'axe de symétrie du mât réacteur génère une cambrure du mât à iso-structure et iso-forme aérodynamique. Comme on le voit sur la figure 8B, cette cambrure a un effet positif sur la traînée, l'épaisseur de la couche limite Cinf étant plus faible du côté du générateur de tourbillon 2 que du côté sans générateur de tourbillon.

Quel que soit le mode de réalisation de l'invention, la modification de forme du mât réacteur associé à l'installation des générateurs de tourbillons sur le caisson de mât permet un gain de masse de l'ordre de plusieurs dizaines de kilos, cela à iso-comportement aérodynamique, c'est-à-dire à comportement aérodynamique identique à celui d'un aéronef classique. Le gain de masse permet alors d'améliorer les performances aérodynamiques de l'aéronef fabriqué selon le procédé de l'invention.

## Revendications

1. Procédé de fabrication d'un mât réacteur (7) destiné à être monté entre un réacteur (1) et une voilure (6) d'un aéronef, comportant :
- une opération de montage d'un caisson (8) de mât autour d'une structure primaire (9), le caisson ayant une forme sensiblement oblongue le long duquel se forme, en vol, une couche limite d'air (C),
- une opération de montage d'au moins un générateur de tourbillons (2) sur le caisson du mât afin que soit modifiée une épaisseur (e) de la couche limite,
**caractérisé en ce qu'**il comporte, au préalable, une opération de détermination de la forme du mât, en fonction de l'épaisseur modifiée de la couche limite et du positionnement des générateurs de tourbillons.

2. Procédé selon la revendication 1, **caractérisé en ce que** des générateurs de tourbillons sont montés symétriquement de part et d'autre du caisson du mât.

3. Procédé selon la revendication 2, **caractérisé en ce que** la forme du mât est déterminée pour que la structure primaire ait une surface élargie afin d'améliorer une reprise des efforts provenant du réacteur.

4. Procédé selon la revendication 2, **caractérisé en ce que** la forme du mât est déterminée pour qu'une longueur du caisson soit raccourcie.

5. Procédé selon la revendication 1 ou 2, **caractérisé en ce que** au moins un générateur de tourbillons est monté sur un seul coté du caisson du mât, induisant un effet de courbure de la forme aérodynamique du mât.

6. Mât réacteur pour aéronef réalisé suivant le procédé selon l'une quelconque des revendications 1 à 5, comportant :
- un caisson de mât (8) monté autour d'une structure primaire (9), le caisson ayant une forme sensiblement oblongue le long duquel se forme, en vol, une couche limite d'air (C),
- des générateurs de tourbillons montés sur le caisson du mât symétriquement de part et d'autre du mât, pour assurer une modification de l'épaisseur de la couche limite,
et en ce que la structure primaire est de forme sensiblement parallélépipédique avec une largeur élargie de 1 à 10% au niveau de sa surface rectangulaire par rapport à une structure primaire d'un aéronef de même type équipé d'un mât réacteur sans générateurs de tourbillons, cette structure primaire élargie améliorant la transmission des efforts de reprise.

7. Mât réacteur pour aéronef réalisé suivant le procédé selon l'une quelconque des revendications 1 à 5, comportant :
- un caisson de mât (8) monté autour d'une structure primaire (9), le caisson ayant une forme sensiblement oblongue le long duquel se forme, en vol, une couche limite d'air (C),
- des générateurs de tourbillons montés sur le caisson du mât, symétriquement de part et d'autre du mât, pour assurer une modification de l'épaisseur de la couche limite, et
- des angles de rétreint de l'ordre de 20 à 40°.

8. Mât réacteur pour aéronef réalisé suivant le procédé selon l'une quelconque des revendications 1 à 5, comportant :
- un caisson de mât (8) monté autour d'une structure primaire (9), le caisson ayant une forme sensiblement oblongue le long duquel se forme, en vol, une couche limite d'air (C),
- au moins un générateur de tourbillons monté sur un seul côté (intrados ou extrados) du mât réacteur de façon à ce que le flux d'air ne soit pas réparti symétriquement de part et d'autre du mât réacteur, cette répartition asymétrique du flux d'air générant un effet de courbure du mât.

9. Aéronef comportant au moins une voilure, un réacteur et un mât réacteur (7) reliant le réacteur (1) à la voilure(6), **caractérisé en ce que** le mât réacteur est conforme à l'une quelconque des revendications 6 à 8.

## Patentansprüche

1. Verfahren zur Fertigung eines Triebwerkspylons (7), der dazu bestimmt ist, zwischen einem Triebwerk (1) und einem Tragwerk (6) eines Luftfahrzeugs montiert zu werden, das aufweist:
- einen Vorgang der Montage eines Pylonkastens (8) um eine Primärstruktur (9) herum, wobei der Kasten eine im Wesentlichen längliche Form hat, um die herum sich im Flug eine Luftgrenzschicht (C) bildet,
- einen Vorgang der Montage mindestens eines Wirbelgenerators (2) auf den Kasten des Pylons, damit eine Dicke (e) der Grenzschicht verändert wird,
**dadurch gekennzeichnet, dass** es vorher einen Vorgang der Festlegung der Form des Pylons abhängig von der veränderten Dicke der Grenzschicht und der Positionierung der Wirbelgeneratoren aufweist.

2. Verfahren nach Anspruch 1, **dadurch gekennzeichnet, dass** Wirbelgeneratoren symmetrisch zu beiden Seiten des Kastens des Pylons montiert werden.

3. Verfahren nach Anspruch 2, **dadurch gekennzeichnet, dass** die Form des Pylons so festgelegt wird, dass die Primärstruktur eine verbreiterte Fläche hat, um eine Aufnahme der vom Triebwerk kommenden Kräfte zu verbessern.

4. Verfahren nach Anspruch 2, **dadurch gekennzeichnet, dass** die Form des Pylons so festgelegt wird, dass eine Länge des Kastens verkürzt wird.

5. Verfahren nach Anspruch 1 oder 2, **dadurch gekennzeichnet, dass** mindestens ein Wirbelgenerator auf eine einzige Seite des Kastens des Pylons montiert wird, der eine Krümmungswirkung der aerodynamischen Form des Pylons induziert.

6. Triebwerkspylon für ein Luftfahrzeug, der gemäß dem Verfahren nach einem der Ansprüche 1 bis 5 hergestellt wird, der aufweist:
- einen Pylonkasten (8), **der um eine** Primärstruktur (9) herum montiert ist, wobei der Kasten eine im Wesentlichen längliche Form hat, entlang dessen sich im Flug eine Luftgrenzschicht (C) bildet,
- Wirbelgeneratoren, die a u f den Kasten des Pylons symmetrisch zu beiden Seiten des Pylons montiert sind, um eine Veränderung der Dicke der Grenzschicht zu gewährleisten,
**dadurch gekennzeichnet, dass** die Primärstruktur eine im Wesentlichen parallelepipedische Form hat, mit einer von 1 bis 10% verbreiterten Breite im Bereich ihrer rechtwinkligen Fläche bezüglich einer Primärstruktur eines Luftfahrzeugs gleichen T y p s , die mit einem Triebwerkspylon ohne Wirbelgeneratoren ausgestattet ist, wobei diese verbreiterte Primärstruktur die Übertragung der Aufnahmekräfte verbessert.

7. Triebwerkspylon für ein Luftfahrzeug, der gemäß dem Verfahren nach einem der Ansprüche 1 bis 5 hergestellt wird, der aufweist:
- einen Pylonkasten (8), **der um eine** Primärstruktur (9) herum montiert wird, wobei der Kasten eine im Wesentlichen längliche Form hat, entlang dessen sich im Flug eine Luftgrenzschicht (C) bildet,
- Wirbelgeneratoren, die a u f den Kasten des Pylons symmetrisch zu beiden Seiten des Pylons montiert sind, um eine Veränderung der Dicke der Grenzschicht zu gewährleisten, und
- Verjüngungswinkel in der Größenordnung von 20 bis 40°.

8. Triebwerkspylon für ein Luftfahrzeug, der gemäß dem Verfahren nach einem der Ansprüche 1 bis 5 hergestellt wird, der aufweist:
- einen Pylonkasten (8), **der um eine** Primärstruktur (9) herum montiert ist, wobei der Kasten eine im Wesentlichen längliche Form hat, entlang dessen sich im Flug eine Luftgrenzschicht (C) bildet,
- mindestens einen Wirbelgenerator, der auf eine einzige Druckseite oder Saugseite des Triebwerkspylons so montiert ist, dass der Luftstrom nicht symmetrisch auf beiden Seiten des Triebwerkspylons verteilt wird, wobei diese unsymmetrische Verteilung des Luftstroms eine Krümmungswirkung des Pylons erzeugt.

9. Luftfahrzeug, das mindestens ein Tragwerk, ein Triebwerk und einen Triebwerkspylon (7) aufweist, der das Triebwerk (1) mit dem Tragwerk (6) verbindet, **dadurch gekennzeichnet, dass** der Triebwerkspylon einem der Ansprüche 6 bis 8 entspricht.

## Claims

1. Method for producing an engine pylon (7) designed to be mounted between an engine (1) and a wing (6) of an aircraft, comprising:
- a step of mounting a pylon fairing (8) around a primary structure (9), the fairing having a substantially oblong shape along which a boundary layer of air (C) forms in flight,
- a step of mounting at least one vortex generator (2) on the pylon fairing so as to modify the thickness (e) of the boundary layer,
**characterized in that** it comprises, beforehand, a step of determining the shape of the pylon as a function of the modified thickness of the boundary layer and the position of the vortex generators.

2. Method according to Claim 1, **characterized in that** vortex generators are mounted symmetrically on either side of the pylon fairing.

3. Method according to Claim 2, **characterized in that** the shape of the pylon is determined such that the primary structure has an increased surface in order to improve the transmission of forces from the engine.

4. Method according to Claim 2, **characterized in that** the shape of the pylon is determined such that the fairing is shortened.

5. Method according to Claim 1 or 2, **characterized in that** at least one vortex generator is mounted on a single side of the pylon fairing, inducing an effect of curving the aerodynamic shape of the pylon.

6. Engine pylon for aircraft produced in accordance with the method according to any one of Claims 1 to 5, comprising:
- a pylon fairing (8) mounted around a primary structure (9), the fairing having a substantially oblong shape along which a boundary layer of air (C) forms in flight,
- vortex generators mounted on the pylon fairing, symmetrically on either side of the pylon, in order to modify the thickness of the boundary layer,
**characterized in that** the primary structure is substantially parallelepipedal in shape, having a rectangular surface 1 to 10% wider than a primary structure of an aircraft of the same type equipped with an engine pylon without vortex generators, this wider primary structure improving the transmission of reaction forces.

7. Engine pylon for aircraft produced in accordance with the method according to any one of Claims 1 to 5, comprising:
- a pylon fairing (8) mounted around a primary structure (9), the fairing having a substantially oblong shape along which a boundary layer of air (C) forms in flight,
- vortex generators mounted on the pylon fairing, symmetrically on either side of the pylon, in order to modify the thickness of the boundary layer, and
- narrowing angles of the order of 20 to 40°.

8. Engine pylon for aircraft produced in accordance with the method according to any one of Claims 1 to 5, comprising:
- a pylon fairing (8) mounted around a primary structure (9), the fairing having a substantially oblong shape along which a boundary layer of air (C) forms in flight,
- at least one vortex generator mounted on a single side (pressure face or suction face) of the engine pylon such that the airflow is not distributed symmetrically on either side of the engine pylon, this asymmetric distribution of the airflow producing an effect of curvature of the pylon.

9. Aircraft comprising at least one wing, one engine and one engine pylon (7) connecting the engine (1) to the wing (6), **characterized in that** the engine pylon is in accordance with any one of Claims 6 to 8.
